# EUROPÄISCHE PATENTANMELDUNG

(11) **EP 2 752 998 A1**
(43) Veröffentlichungstag der Anmeldung: **09.07.2014**
(21) Anmeldenummer: 13193693.2
(22) Anmeldetag: 20.11.2013
(51) Int. Cl.: H04B 3/54, H04B 3/56

(54) **Vorrichtung zur Diversity-Einkopplung von Powerline-Signalen in ein Dreileiter-Stromversorgungsnetz**

(30) Priorität: 07.01.2013 DE 102013100070
(71) Anmelder: Devolo AG, 52068 Aachen (DE)
(72) Erfinder: Grusdat, Patrick, 52351 Düren (DE)
(74) Vertreter: Cohausz & Florack

(57) **Zusammenfassung**

Die vorliegende Erfindung betrifft eine Vorrichtung zur Kopplung eines Modems an ein Stromversorgungsnetz zur Übertragung von Daten über das Stromversorgungsnetz, umfassend einen Netzanschluss, welcher dazu eingerichtet ist, die Vorrichtung mit einem Phasenleiter, einen Nulleiter und einen Schutzleiter des Stromversorgungsnetz zu verbinden, einen Transformator, umfassend eine sekundärseitige Wicklung, eine erste primärseitige Wicklung und eine mit der ersten primärseitigen Wicklung in Reihe verbundene zweite primärseitige Wicklung, wobei die Vorrichtung dazu eingerichtet ist, einen sekundärseitigen Übertragungskanal mit zwei primärseitigen Übertragungskanälen zumindest hochfrequenzmäßig zu koppeln.

## Beschreibung

Der Gegenstand betrifft eine Vorrichtung zur Kopplung eines Modems an ein Stromversorgungsnetz zur Übertragung von Daten über das Stromversorgungsnetz.

Powerline Kommunikation (PLC) ist eine Technologie, die Daten über Energieversorgungsnetze überträgt. Ein Energieversorgungsnetz kann dabei die hausinterne Niederspannungsinstallation ebenso sein, wie das Versorgungsnetz außerhalb des Hauses, oder die Mittel- und Hochspannungsleitungen, in den großen Verbundnetzen der Energieversorger.

Die PLC moduliert dazu die zu übertragenen Daten als Hochfrequenzsignal auf die elektrischen Leitungen des Energieversorgungsnetzes. Die dabei verwendeten Frequenzen liegen im aktuellen, technischen Implementierungen im Bereich zwischen 9kHz und 100MHz, wobei dieser Frequenzbereich auch noch nach oben und/oder unten erweitert werden kann.

"Diversity" (engl. Vielfältigkeit) beschreibt im Zusammenhang mit der PLC-Technologie die Übertragung von PLC-Signalen unter Zuhilfenahme weiterer Leiter.

Problematisch bei der Verwendung von Diversity bei der PLC-Technologie kann die Einhaltung von Grenzwerten bei der Zertifizierung sein. So müssen beispielsweise bei einer Zertifizierung nach dem Standard EN50561-1 (Einrichtungen der Informationstechnik, Kommunikationsgeräte auf elektrischen Niederspannungsnetzen - Funkstöreigenschaften - Grenzwerte und Messverfahren - Teil 1: Geräte für die Verwendung im Heimbereich) definierte Grenzwerte bezüglich des Sendepegels eingehalten werden, wobei bei PLC-Diversity-Verfahren oftmals die Sendepegel abgesenkt werden müssen, um diese Grenzwerte einzuhalten - einhergehend mit einem Verlust des Diversity-Gewinns.

Aus den zuvor aufgezeigten Nachteilen lag dem Gegenstand die Aufgabe zugrunde, eine Vorrichtung zur Erzielung von Diversity für PLC-Systeme zu schaffen, welche eine einfache Implementierung ermöglicht und/oder Verbesserung der Einhaltung von Grenzwerten bei der Zertifizierung einhergehend mit einem Diversity-Gewinn ermöglicht.

Diese Aufgabe wird gegenständlich gelöst durch eine Vorrichtung zur Kopplung eines Modems an ein Stromversorgungsnetz zur Übertragung von Daten über das Stromversorgungsnetz, umfassend einen Netzanschluss, welcher dazu eingerichtet ist, die Vorrichtung mit einem Phasenleiter, einen Nulleiter und einen Schutzleiter des Stromversorgungsnetz zu verbinden, einen Transformator, umfassend eine sekundärseitige Wicklung, eine erste primärseitige Wicklung und eine mit der ersten primärseitigen Wicklung in Reihe verbundene zweite primärseitige Wicklung, einen ersten primärseitigen Kontakt, welcher an dem der zweiten primärseitigen Wicklung abgewandten Ende der ersten primärseitigen Wicklung angeordnet ist, einen zweiten primärseitigen Kontakt, welcher an dem der ersten primärseitigen Wicklung abgewandten Ende der zweiten primärseitigen Wicklung angeordnet ist, einen dritten primärseitigen Kontakt, welcher zwischen der ersten primärseitigen Wicklung und der zweiten primärseitigen Wicklung angeordnet ist, einen ersten und einen zweiten sekundärseitigen Kontakt, welche jeweils an den verschiedenen Enden der sekundärseitigen Wicklung angeordnet sind, wobei der erste primärseitige Kontakt, der zweite primärseitige Kontakt und der dritte primärseitige Kontakt jeweils dazu eingerichtet sind, über den Netzanschluss mit jeweils einem verschiedenen Leiter aus einem Phasenleiter, einem Nulleiter und einem Schutzleiter des Stromversorgungsnetzes verbunden zu werden, und wobei die Vorrichtung dazu eingerichtet ist, einen sekundärseitigen Übertragungskanal, welcher zwischen dem ersten und zweiten sekundärseitigen Kontakt ausgebildet wird, mit zwei primärseitigen Übertragungskanälen zumindest hochfrequenzmäßig zu koppeln, und wobei die Vorrichtung dazu eingerichtet ist, einen ersten Übertragungskanal der zwei primärseitigen Übertragungskanäle zwischen dem ersten und dem dritten primärseitigen Kontakt und einen zweiten Übertragungskanal der zwei primärseitigen Übertragungskanäle zwischen dem zweiten und dem dritten primärseitigen Kontakt auszubilden.

Diese Aufgabe wird ferner gegenständlich gelöst durch ein Modem zur Übertragung von Daten über ein Stromversorgungsnetz, umfassend die zuvor beschriebene Vorrichtung, wobei das Modem mit dem ersten und zweiten sekundärseitigen Kontakt der Vorrichtung zur Kopplung des Modems an das Stromversorgungsnetz angeschlossen ist.

Das Modem stellt daher ein PLC-Modem dar, welches zur Übertragung von Daten über ein Stromversorgungsnetz eingerichtet ist.

Die Vorrichtung umfasst einen Transformator, welcher eine sekundärseitige Wicklung, eine erste primärseitige Wicklung und eine mit der ersten primärseitigen Wicklung in Reihe verbundene zweite primärseitige Wicklung umfasst. Somit ist die sekundärseitige Wicklung sowohl mit der ersten primärseitigen Wicklung als auch mit der zweiten primärseitigen Wicklung induktiv gekoppelt.

Der erste primärseitige Kontakt der zweite primärseitige Kontakt und der dritte primärseitige Kontakt des Transformators sind jeweils dazu eingerichtet, über den Netzanschluss mit jeweils einem verschiedenen Leiter aus einem Phasenleiter, einem Nulleiter und einem Schutzleiter des Stromversorgungsnetzes verbunden zu werden, wenn der Netzanschluss mit dem Stromversorgungsnetz verbunden wird, wie beispielsweise durch Einstecken eines Netzsteckers in eine Steckdose des Stromversorgungsnetzes.

Beispielsweise kann der Netzwerkanschluss einen ersten Kontakt aufweisen, welcher mit dem ersten primärseitigen Kontakt verbunden ist, und einen zweiten Kontakt aufweisen, welcher mit dem zweiten primärseitigen Kontakt verbunden ist, und einen dritten Kontakt aufweisen, welcher mit dem dritten primärseitigen Kontakt verbunden ist, wobei der erste Kontakt, der zweite Kontakt und der dritte Kontakt des Netzwerkanschlusses mit jeweils einem verschiedenen Leiter aus Phasenleiter, Nulleiter und Schutzleiter des Stromversorgungsnetzes verbunden wird, wenn der Netzwerkanschluss an das Stromversorgungsnetzwerk angeschlossen wird. Beispielsweise kann der Anschluss einen Netzstecker darstellen oder mit einem Netzstecker verbunden sein.
An den ersten und zweiten sekundärseitigen Kontakt des Transformators kann beispielsweise ein PLC-Modem zur Ein- und/oder Auskopplung von PLC-Signalen angeschlossen werden.

Die Vorrichtung ist dazu eingerichtet, einen sekundärseitigen Übertragungskanal, welcher zwischen dem ersten sekundärseitigen Kontakt und dem zweiten sekundärseitigen Kontakt ausgebildet wird und an welchen beispielsweise ein PLC-Modem angeschlossen werden kann, mit zwei primärseitigen Übertragungskanälen zumindest hochfrequenzmäßig zu koppeln, wobei ein erster Übertragungskanal der zwei primärseitigen Übertragungskanäle zwischen dem ersten primärseitigen Kontakt und dem dritten primärseitigen Kontakt und ein zweiter Übertragungskanal der zwei primärseitigen Übertragungskanäle zwischen dem zweiten primärseitigen Kontakt und dem dritten primärseitigen Kontakt ausgebildet wird.

Als Hochfrequenz in Zusammenhang mit einer PLC-Übertragung können beispielsweise Frequenzen von mehr als 1kHz, oder mehr als 9kHz, oder mehr als 100kHz, oder mehr als 1MHz betrachtet werden. Ferner können beispielsweise optional auch tiefere Frequenzanteile zwischen dem sekundärseitigen Übertragungskanal und ersten primärseitigen Übertragungskanal und zwischen dem sekundärseitigen Übertragungskanal und dem zweiten primärseitigen Übertragungskanal gekoppelt werden.

Beispielsweise sind daher zwischen dem ersten primärseitigen Kontakt und dem ersten Kontakt des Netzwerkanschlusses, zwischen dem zweiten primärseitigen Kontakt und dem zweiten Kontakt des Netzwerkanschlusses, und zwischen dem dritten primärseitigen Kontakt und dem dritten Kontakt des Netzwerkanschlusses keine als Tiefpass wirkenden elektrischen Bauelemente, wie beispielsweise eine Spule, angeordnet.

Zwischen dem ersten primärseitigen Kontakt und dem ersten Kontakt des Netzwerkanschlusses, und/oder zwischen dem zweiten primärseitigen Kontakt und dem zweiten Kontakt des Netzwerkanschlusses, und/oder zwischen dem dritten primärseitigen Kontakt und dem dritten Kontakt des Netzwerkanschlusses kann jedoch beispielsweise jeweils ein Kondensator, welcher beispielsweise eine Kapazität von 4,7nF oder eine hiervon abweichende Kapazität aufweisen kann, angeordnet sein.

Somit kann beispielsweise ein an den ersten und zweiten sekundärseitigen Kontakt angeschlossenes PLC-Modem ein PLC-Signal in den sekundärseitigen Übertragungskanal einspeisen, wobei dieses Signal durch die sekundärseitige Wicklung des Transformators zumindest teilweise sowohl in die erste primärseitige Wicklung und die zweite primärseitige Wicklung des Transformators eingekoppelt werden kann, so dass dieses PLC-Signal zumindest teilweise sowohl über den ersten primärseitigen Übertragungskanal als auch über den zweiten primärseitigen Übertragungskanal übertragen werden kann.

Diese Einkopplungsvariante kann daher beispielsweise als eine Single-Input Multiple-Output (SIMO) Kopplung betrachtet werden, wobei ein Diversity-Gewinn durch die Verwendung der zwei primärseitigen Übertragungskanäle erreicht werden kann. Umgekehrt kann beispielsweise das PLC-Modem ein PLC-Signal von dem sekundärseitigen Übertragungskanal empfangen, wobei Signalanteile dieses PLC-Signals primärseitig sowohl über den ersten primärseitigen Übertragungskanal als auch über den zweiten primärseitigen Übertragungskanal empfangen werden, und der Transformator den ersten primärseitigen Übertragungskanal durch die erste primärseitige Wicklung in die sekundärseitige Wicklung einkoppelt und den zweiten primärseitigen Übertragungskanal durch die zweite primärseitige Wicklung in die sekundärseitige Wicklung einkoppelt.

Diese Einkopplungsvariante kann daher beispielsweise als eine Multiple-Input Single-Output (MISO) Kopplung betrachtet werden, wobei ein Diversity-Gewinn durch die Verwendung der zwei primärseitigen Übertragungskanäle erreicht werden kann.

Die Kopplung des PLC-Modems an die Vorrichtung zur Übertragung von Daten über das Stromversorgungsnetzwerk erfolgt auf der Sekundärseite des Transformators beispielsweise ausschließlich über den ersten und zweiten sekundärseitigen Kontakt, so dass ein an die Vorrichtung angeschlossenes PLC-Modem beispielsweise ausschließlich den sekundärseitigen Übertragungskanal zur Einspeisung von PLC-Signalen in die Vorrichtung und/oder ausschließlich den sekundärseitigen Übertragungskanal zum Empfang von PLC-Signalen von der Vorrichtung verwendet.

Mit der durch die Vorrichtung beschriebenen Koppelvariante zur Kopplung eines PLC-Modems an ein Stromversorgungsnetzwerk zur Übertragung von Daten über das Stromversorgungsnetzwerk kann auf eine einfache Art und Weise in Diversity-Gewinn durch die Verwendung der zwei primärseitigen Übertragungskanäle erzielt werden. Hierbei können beispielsweise herkömmliche PLC-Modems, welche nicht für eine Multiple-Input Multiple-Output (MIMO) Übertragung ausgelegt sind, durch die Vorrichtung zur Übertragung von PLC-Signalen über die zwei primärseitigen Übertragungskanäle über das Stromversorgungsnetzwerk verwendet werden können, einhergehend mit einem Diversity-Gewinn.

So kann beispielsweise der sekundärseitige Übertragungskanal im Halbduplexverfahren abwechselnd entweder für das Senden von PLC-Signalen vom Modem oder für das Empfangen von PLC-Signalen am Modem verwendet werden.

Gemäß einem vorteilhaften Ausführungsbeispiel wird vorgeschlagen, dass das Wicklungsverhältnis zwischen der ersten primärseitigen Wicklung und der zweiten primärseitigen Wicklung näherungsweise 1:1 beträgt.

Gemäß einem vorteilhaften Ausführungsbeispiel wird vorgeschlagen, dass das Wicklungsverhältnis zwischen der ersten primärseitigen Wicklung und der sekundärseitigen Wicklung näherungsweise zwischen 1:1 und 1:2 beträgt und dass das Wicklungsverhältnis zwischen der zweiten primärseitigen Wicklung und der sekundärseitigen Wicklung näherungsweise zwischen 1:1 und 1:2 beträgt.

Somit kann beispielsweise das Wickelverhältnis zwischen der ersten primärseitigen Wicklung, der zweiten primärseitigen Wicklung und der sekundärseitigen Wicklung näherungsweise zwischen 1:1:1 und 1:1:2 liegen.

Der Begriff näherungsweise kann im Folgenden beispielsweise derart verstanden werden, dass eine Abweichung von weniger als 35% vom Nennwert, oder weniger als 10% vom Nennwert, oder weniger als 5% vom Nennwert, oder weniger als 1% vom Nennwert, als näherungsweise dem Nennwert entsprechend verstanden werden kann. Bei einer beispielhaften Abweichung von weniger als 10% würden bei einem näherungsweisen Wicklungsverhältnis von 1:1 Wicklungsverhältnisse zwischen 0,9:1,1 und 1,1:0,9 unter das näherungsweise Wicklungsverhältnis von 1:1 fallen.

Gemäß einem vorteilhaften Ausführungsbeispiel wird vorgeschlagen, dass das Wicklungsverhältnis zwischen der ersten primärseitigen Wicklung und der sekundärseitigen Wicklung und das Wicklungsverhältnis zwischen der zweiten primärseitigen Wicklung und der sekundärseitigen Wicklung jeweils eines der folgenden Verhältnisse aufweist: näherungsweise 1:1; und näherungsweise 1:2.

Beträgt beispielsweise das Wickelverhältnis zwischen der ersten primärseitigen Wicklung, der zweiten primärseitigen Wicklung und der sekundärseitigen Wicklung näherungsweise 1:1:2, d.h. das Wicklungsverhältnis zwischen der ersten primärseitigen Wicklung und der sekundärseitigen Wicklung und das Wicklungsverhältnis zwischen der zweiten primärseitigen Wicklung und der sekundärseitigen Wicklung beträgt näherungsweise 1:2, so wird eine Hälfte einer in den sekundärseitigen Übertragungskanal eingespeisten Spannung in den ersten primärseitigen Übertragungskanal und die andere Hälfte der eingespeisten Spannung in den zweiten primärseitigen Übertragungskanal gekoppelt.

Gemäß einem vorteilhaften Ausführungsbeispiel wird vorgeschlagen, dass der erste primärseitige Kontakt dazu eingerichtet ist, mit einem Leiter aus Phasenleiter und Nulleiter verbunden zu werden, und der zweite primärseitige Kontakt dazu eingerichtet ist, mit dem anderen Leiter aus Phasenleiter und Nulleiter verbunden zu werden, und wobei der dritte primärseitige Kontakt dazu eingerichtet ist, mit dem Schutzleiter verbunden zu werden.

Dementsprechend kann der zweite Kontakt des Netzwerkanschlusses dazu eingerichtet sein, dass dieser zweite Kontakt mit dem Schutzleiter (PE) des Stromversorgungsnetzes verbunden wird, wenn der Netzwerkanschluss, beispielsweise durch Einstecken eines Schutzkontaktsteckers in eine entsprechende Steckdose des Stromversorgungsnetzwerkes, mit dem Stromversorgungsnetzwerk verbunden wird.

Ferner kann der erste Kontakt des Netzwerkanschlusses dazu eingerichtet sein, mit einem Leiter aus Phasenleiter und Nullleiter des Stromversorgungsnetzes verbunden zu werden, und der dritte Kontakt des Netzwerkanschlusses kann dazu eingerichtet sein, mit dem anderen Leiter aus Phasenleiter und Nullleiter des Stromversorgungsnetzes verbunden zu werden, wenn die Netzwerkanschluss an das Stromversorgungsnetz angeschlossen wird, wie beispielsweise durch Einstecken eines Schutzkontaktsteckers in eine entsprechende Steckdose des Stromversorgungsnetzwerkes.

Das Wicklungsverhältnis zwischen der ersten primärseitigen Wicklung, der zweiten primärseitigen Wicklung und der sekundärseitigen Wicklung kann vorzugsweise näherungsweise 1:1:2, d.h. das Wicklungsverhältnis zwischen der ersten primärseitigen Wicklung und der zweiten primärseitigen Wicklung beträgt beispielsweise näherungsweise 1:1, während das Wicklungsverhältnis zwischen der ersten primärseitigen Wicklung und der sekundärseitigen Wicklung beispielsweise näherungsweise 1:2 beträgt bzw. das Wicklungsverhältnis zwischen der zweiten primärseitigen Wicklung und der sekundärseitigen Wicklung beispielsweise näherungsweise 1:2 beträgt.

Durch die beispielhafte Wahl des Wickelverhältnisses zwischen der ersten primärseitigen Wicklung, der zweiten primärseitigen Wicklung und der sekundärseitigen Wicklung von näherungsweise 1:1:2 kann es ermöglicht werden, dass eine Hälfte einer in den sekundärseitigen Übertragungskanal eingespeiste Spannung in den ersten primärseitigen Übertragungskanal und die andere Hälfte der eingespeisten Spannung in den zweiten primärseitigen Übertragungskanal gekoppelt wird. Hierbei ist das Übertragungsverhältnis zum Phasenleiter-Neutralleiter-Pfad, genau wie bei einem nicht-diversity Gerät, 1:1, wodurch sich am Signalpegel nichts ändert.

Durch den durch den dritten primärseitigen Kontakt des Transformators erfolgt über den zweiten Kontakt des Netzwerkanschlusses ein Mittelabgriff der beiden primärseitigen Wicklungen an PE, wobei jeweils die halbe Signalspannung auf PE gekoppelt wird.

Somit weist der Transformator gemäß diesem Ausführungsbeispiel eine volle Symmetrie bezüglich der Ein- und Auskopplung von PLC-Signalen zwischen dem sekundärseitigen Übertragungskanal und dem ersten und zweiten primärseitigen Übertragungskanal auf.

Diese Kopplungsart kann beispielsweise dann besonders vorteilhaft sein, wenn der Netzanschluss beispielsweise einen Schutzkontaktstecker umfasst, welcher nicht eindeutig bezüglich der Kontaktierung von Phasenleiter und Nulleiter ist, wie beispielsweise einem zu CEE ("Commission on the Rules for the Approval of the Electrical Equipment") 7/4 kompatiblen Stecker, da diese Kopplungsart unabhängig davon ist, ob der erste Kontakt des Netzanschlusses mit dem Phasenleiter oder dem Nulleiter und der dritte Kontakt des Netzanschlusses mit dem Nulleiter oder dem Phasenleiter verbunden ist, da in beiden Fällen die volle Symmetrie gewährleistet wird. Es können beispielsweise auch andere, nicht zu CEE 7/4 kompatible Stecker mit drei Kontakten verwendet werden.

Ferner erfolgt keine Erhöhung der Störaussendungen, da der Signalpegel unverändert bleibt. Somit können beispielsweise der in der EN50561-1 (Einrichtungen der Informationstechnik, Kommunikationsgeräte auf elektrischen Niederspannungsnetze - Funkstöreigenschaften - Grenzwerte und Messverfahren - Teil 1: Geräte für die Verwendung im Heimbereich) definierten Grenzwerte bezüglich des Sendepegels eingehalten werden, obwohl ein Diversity-Gewinn erzielt wird.

Da diese Koppelart unabhängig von der Einsteckposition des Netzsteckers ist, gibt es bei dieser Koppelart keinen Worst-Case, d.h. eine bestimmte Einsteckposition eines Netzsteckers, bei welchem die Störaussendung maximal ist und einen Grenzwert überschreiten würde, welches eine Absenkung der Sendeleistung nötig machen würde. Somit kann mit dieser Koppelart gemäß der Vorrichtung entsprechend diesem Ausführungsbeispiel ein Absenken der Sendeleistung zum Einhalten von Grenzwerten vermieden werden.

Gemäß einem vorteilhaften Ausführungsbeispiel wird vorgeschlagen, dass die zweite primärseitige Wicklung und die sekundärseitige Wicklung einen entgegengesetzten Wicklungssinn aufweisen.

Gemäß einem vorteilhaften Ausführungsbeispiel wird vorgeschlagen, dass die erste primärseitige Wicklung und die sekundärseitige Wicklung einen der folgenden Wicklungssinne aufweisen: einen entgegengesetzten Wicklungssinn, und einen gleichen Wicklungssinn.

Gemäß einem vorteilhaften Ausführungsbeispiel wird vorgeschlagen, dass der erste primärseitige Kontakt dazu eingerichtet ist, mit einem Leiter aus Phasenleiter und Nulleiter verbunden zu werden, und der dritte primärseitige Kontakt dazu eingerichtet ist, mit dem anderen Leiter aus Phasenleiter und Nulleiter verbunden zu werden, und wobei der zweite primärseitige Kontakt dazu eingerichtet ist, mit dem Schutzleiter verbunden zu werden.

Dementsprechend kann der zweite Kontakt des Netzwerkanschlusses dazu eingerichtet, dass dieser zweite Kontakt mit dem Schutzleiter (PE) des Stromversorgungsnetzes verbunden wird, wenn der Netzwerkanschluss, beispielsweise durch Einstecken eines Schutzkontaktsteckers in eine entsprechende Steckdose des Stromversorgungsnetzwerkes, mit dem Stromversorgungsnetzwerk verbunden wird.

Ferner kann der erste Kontakt des Netzwerkanschlusses dazu eingerichtet sein, mit einem Leiter aus Phasenleiter und Nullleiter des Stromversorgungsnetzes verbunden zu werden, und der dritte Kontakt des Netzwerkanschlusses kann dazu eingerichtet sein, mit dem anderen Leiter aus Phasenleiter und Nullleiter des Stromversorgungsnetzes verbunden zu werden, wenn die Netzwerkanschluss an das Stromversorgungsnetz angeschlossen wird, wie beispielsweise durch Einstecken eines Schutzkontaktsteckers in eine entsprechende Steckdose des Stromversorgungsnetzwerkes.

Das Wicklungsverhältnis zwischen der ersten primärseitigen Wicklung, der zweiten primärseitigen Wicklung und der sekundärseitigen Wicklung kann bei diesem Ausführungsbeispiel beispielsweise näherungsweise 1:1:1, d.h. das Wicklungsverhältnis zwischen der ersten primärseitigen Wicklung und der zweiten primärseitigen Wicklung beträgt beispielsweise näherungsweise 1:1, während das Wicklungsverhältnis zwischen der ersten primärseitigen Wicklung und der sekundärseitigen Wicklung beispielsweise näherungsweise 1:1 beträgt bzw. das Wicklungsverhältnis zwischen der zweiten primärseitigen Wicklung und der sekundärseitigen Wicklung beispielsweise näherungsweise 1:1 beträgt.

Beispielsweise können bei der Vorrichtung gemäß diesem Ausführungsbeispiel die zweite primärseitige Wicklung und die sekundärseitige Wicklung einen entgegengesetzten Wicklungssinn aufweisen.

Ferner können gemäß einer beispielhaften ersten Variante die erste primärseitige Wicklung und die sekundärseitige Wicklung ebenfalls einen entgegengesetzten Wicklungssinn aufweisen.

Durch das Wicklungsverhältnis von näherungsweise 1:1:1 ist die in den ersten primärseitigen Übertragungskanal eingekoppelte Spannung näherungsweise gleich der in den zweiten primärseitigen Übertragungskanal eingekoppelten Spannung. Durch diese Kopplungsvariante kann eine einfache Realisierung einer SIMO- bzw. MISO-Kopplung für PLC-Modems erzielt werden.

Im Folgenden sei ohne Einschränkung beispielhaft angenommen, dass der erste Kontakt des Netzwerkanschlusses mit dem Neutralleiter (N) und der zweite Kontakt des Netzwerkanschlusses mit dem Phasenleiter (L) des Stromversorgungsnetzes verbunden wird, wenn der Netzwerkanschluss an das Stromversorgungsnetzwerk angeschlossen ist, wobei dies auch beispielsweise genau umgekehrt erfolgen kann.

Ferner können gemäß einer beispielhaften zweiten Variante die erste primärseitige Wicklung und die sekundärseitige Wicklung einen gleichen Wicklungssinn aufweisen. Die zwischen L und N eingekoppelte Signalspannung und die zwischen L und PE eingekoppelte Signalspannung sind näherungsweise identisch. Durch die Phasenlage dieser Kopplung ergibt sich zwischen N und PE ein nahezu identisches Signal, wodurch die Spannungsdifferenz zwischen N und PE nahezu Null wird. Auch Durch diese Kopplungsvariante kann eine einfache Realisierung einer SIMO- bzw. MISO-Kopplung für PLC-Modems erzielt werden. Gemäß einem vorteilhaften Ausführungsbeispiel wird vorgeschlagen, dass die Vorrichtung dazu eingerichtet ist, die Kopplung des Modems zur Übertragung von Daten an das Stromversorgungsnetz an der Sekundärseite des Transformators ausschließlich über den ersten und den zweiten sekundärseitigen Kontakt auszuführen.

Gemäß einem vorteilhaften Ausführungsbeispiel wird vorgeschlagen, dass der Netzanschluss einen zu CEE 7/4 kompatiblen Schutzkontaktstecker umfasst.

Gemäß einem vorteilhaften Ausführungsbeispiel wird vorgeschlagen, dass die Kopplung des Modems zur Übertragung von Daten an das Stromversorgungsnetz auf der Sekundärseite des Transformators ausschließlich über den ersten und den zweiten sekundärseitigen Kontakt erfolgt.

Dieses Ausführungsbeispiel kann beispielsweise insbesondere dann gelten, wenn der Transformator nur eine einzige sekundärseitige Wicklung aufweist.

Somit kann das an die Vorrichtung angeschlossene Modem ausschließlich den sekundärseitigen Übertragungskanal zur Einspeisung von PLC-Signalen in die Vorrichtung und/oder ausschließlich den sekundärseitigen Übertragungskanal zum Empfang von PLC-Signalen von der Vorrichtung verwenden.

Das Modem kann beispielsweise ein PLC-Modem darstellen, welches originär nur für eine SISO-Übertragung eingerichtet ist, d.h. nur für die Übertragung über einen einzelnen Kanal (wie beispielsweise über zwei Leiter eines Stromversorgungsnetzes), wobei durch die erfindungsgemäße Koppelung dieser einzige Kanal des Modems mit dem sekundärseitigen Übertragungskanal der Vorrichtung gekoppelt wird.

Gemäß einem vorteilhaften Ausführungsbeispiel wird vorgeschlagen, dass die sekundärseitige Wicklung des Transformators eine erste sekundärseitige Wicklung des Transformators und der sekundärseitige Übertragungskanal ein erster sekundärseitiger Übertragungskanal darstellt, und der Transformators eine zweite sekundärseitige Wicklung und einen dritten und einen vierten sekundärseitigen Kontakt umfasst, wobei der dritte und vierte sekundärseitige Kontakt jeweils an den verschiedenen Enden der zweiten sekundärseitigen Wicklung angeordnet sind, und wobei die Vorrichtung dazu eingerichtet ist, einen zweiten sekundärseitigen Übertragungskanal, welcher zwischen dem dritten und vierten sekundärseitigen Kontakt ausgebildet wird, mit den zwei primärseitigen Übertragungskanälen zumindest hochfrequenzmäßig zu koppeln, wobei der erste sekundärseitige Übertragungskanal als Empfangskanal für das Modem und der zweite sekundärseitige Übertragungskanal als Sendekanal für das Modem eingerichtet ist.

Sowohl die erste sekundärseitige Wicklung als auch die zweite sekundärseitige Wicklung sind mit der ersten und zweiten sekundärseitigen Wicklung induktiv gekoppelt.

Somit kann beispielsweise der erste sekundärseitige Übertragungskanal mit einer Empfängereinheit des Modems verbunden werden, wobei die Empfängereinheit des Modems mit dem ersten und zweiten sekundärseitigen Kontakt des Transformators zum Empfang von Signalen verbunden sein kann, und es kann beispielsweise der zweite sekundärseitige Übertragungskanal mit einer Sendeeinheit des Modems verbunden werden, wobei die Sendeeinheit des Modems mit dem dritten und vierten sekundärseitigen Kontakt des Transformators zum Empfang von Signalen verbunden sein kann.

Beispielsweise kann das Empfangen über den ersten sekundärseitigen Übertragungskanal und das Senden über den zweiten sekundärseitigen Übertragungskanal im Halbduplexbetrieb erfolgen, da sowohl der erste sekundärseitige Übertragungskanal über den Transformator sowohl mit dem ersten als auch dem zweiten primärseitigen Übertragungskanal zumindest hochfrequenzmäßig als auch der zweite sekundärseitige Übertragungskanal über den Transformator sowohl mit dem ersten als auch dem zweiten primärseitigen Übertragungskanal zumindest hochfrequenzmäßig gekoppelt ist.

Gemäß einem vorteilhaften Ausführungsbeispiel wird vorgeschlagen, dass das Wickelverhältnis zwischen der ersten sekundärseitigen Wicklung und der zweiten sekundärseitigen Wicklung näherungsweise gleich ist.

Die Erfindung wird im Folgenden anhand von Ausführungsbeispiele zeigenden Zeichnungen näher erläutert.

In den Figuren zeigen:
- Fig. 1a: eine exemplarische Vorrichtung gemäß einem ersten Ausführungsbeispiel;
- Fig. 1b: eine exemplarische Vorrichtung gemäß einem abgewandelten ersten Ausführungsbeispiel;
- Fig. 2a: eine exemplarische Vorrichtung gemäß einem zweiten Ausführungsbeispiel;
- Fig. 2b: ein beispielhaftes Zeigerdiagramm für die exemplarische Vorrichtung gemäß dem zweiten Ausführungsbeispiel;
- Fig. 3a: eine exemplarische Vorrichtung gemäß einem dritten Ausführungsbeispiel;
- Fig. 3b: ein beispielhaftes Zeigerdiagramm für die exemplarische Vorrichtung gemäß dem dritten Ausführungsbeispiel;
- Fig. 4a: eine exemplarische Vorrichtung gemäß einem vierten Ausführungsbeispiel; und
- Fig. 4b: ein beispielhaftes Zeigerdiagramm für die exemplarische Vorrichtung gemäß dem vierten Ausführungsbeispiel.

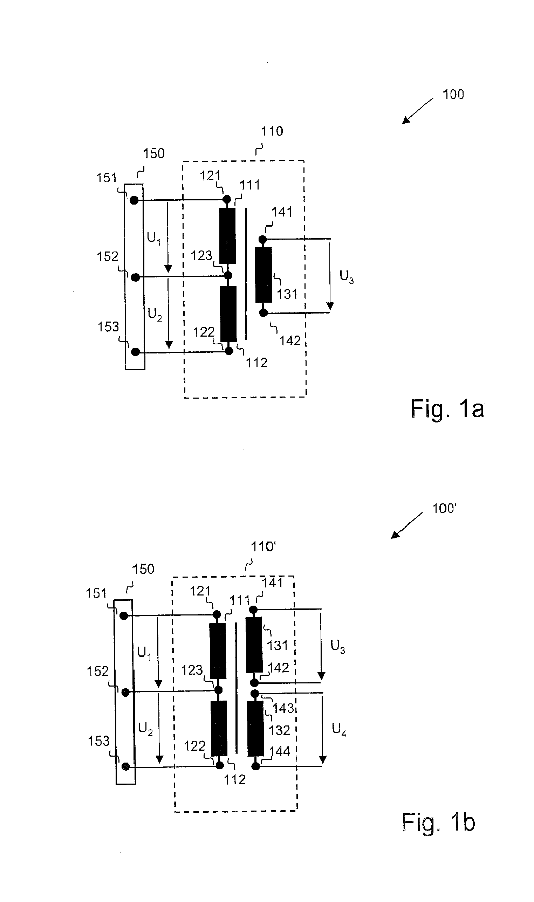

Figur 1a zeigt eine exemplarische Vorrichtung 100 gemäß einem ersten Ausführungsbeispiel.

Die Vorrichtung 100 ist eingerichtet zur Kopplung eines PLC-Modems (nicht in Fig. 1 dargestellt) an ein Stromversorgungsnetzwerk zur Übertragung von Daten über das Stromversorgungsnetzwerk. Beispielsweise kann die Vorrichtung 100 Teil eines solchen PLC-Modems darstellen.

Die Vorrichtung 100 umfasst einen Netzanschluss 150, welcher dazu eingerichtet ist, die Vorrichtung 100 mit einem Phasenleiter, einem Nullleiter und einem Schutzleiter des Stromversorgungsnetzes zu verbinden. Der Netzanschluss 150 umfasst beispielsweise einen ersten Kontakt 151, einen zweiten Kontakt 152 und einen dritten Kontakt 153, wobei jeweils einer dieser drei Kontakte 151, 152, 153 mit jeweils einem unterschiedlichen Leiter aus Phasenleiter, Nullleiter und Schutzleiter des Stromversorgungsnetzes verbunden wird, wenn der Netzanschluss 150 mit dem Stromversorgungsnetz verbunden wird. Beispielsweise kann der Anschluss 150 einen Netzstecker darstellen oder mit einem Netzstecker verbunden sein.

Die Vorrichtung 100 umfasst einen Transformator 110, welcher eine sekundärseitige Wicklung 131, eine erste primärseitige Wicklung 111 und eine mit der ersten primärseitigen Wicklung 111 in Reihe verbundene zweite primärseitige Wicklung 112 umfasst. Somit ist die sekundärseitige Wicklung 131 sowohl mit der ersten primärseitigen Wicklung 111 als auch mit der zweiten primärseitigen Wicklung 112 induktiv gekoppelt, wobei beispielsweise ein erster Wicklungsteil der sekundärseitigen Wicklung 131 mit der ersten primärseitigen Wicklung 111 und ein zweiter Wicklungsteil der sekundärseitigen Wicklung 131 mit der zweiten primärseitigen Wicklung 112 gekoppelt ist.

Ferner umfasst die Vorrichtung 100 einen ersten primärseitigen Kontakt 121, welcher an dem der zweiten primärseitigen Wicklung 112 abgewandten Ende der ersten primärseitigen Wicklung 111 angeordnet ist, einen zweiten primärseitigen Kontakt 122, welcher an dem der ersten primärseitigen Wicklung 111 abgewandten Ende der zweiten primärseitigen Wicklung 112 angeordnet ist, und einen dritten primärseitigen Kontakt 123, welcher zwischen der ersten primärseitigen Wicklung 111 und der zweiten primärseitigen Wicklung 112 angeordnet ist. Der erste primärseitige Kontakt 121, der zweite primärseitige Kontakt 122 und der dritte primärseitige Kontakt 123 sind jeweils dazu eingerichtet, über den Netzanschluss 150 mit jeweils einem verschiedenen Leiter aus einem Phasenleiter, einem Nulleiter und einem Schutzleiter des Stromversorgungsnetzes verbunden zu werden, wenn der Netzanschluss 150 mit dem Stromversorgungsnetz verbunden wird, wie beispielsweise durch Einstecken eines Netzsteckers in eine Steckdose des Stromversorgungsnetzes.

Darüber hinaus umfasst die Vorrichtung 100 einen ersten sekundärseitigen Kontakt 141 und zweiten sekundärseitigen Kontakt 142, welche jeweils an den verschiedenen Enden der sekundärseitigen Wicklung 131 angeordnet sind. An diesen ersten und zweiten sekundärseitigen Kontakt 141, 142 kann beispielsweise ein PLC-Modem zur Ein- und/oder Auskopplung von PLC-Signalen angeschlossen werden.

Die Vorrichtung 100 ist dazu eingerichtet, einen sekundärseitigen Übertragungskanal, welcher zwischen dem ersten sekundärseitigen Kontakt 141 und dem zweiten sekundärseitigen Kontakt 142 ausgebildet wird und an welchen beispielsweise ein PLC-Modem angeschlossen werden kann, mit zwei primärseitigen Übertragungskanälen zumindest hochfrequenzmäßig zu koppeln, wobei ein erster Übertragungskanal der zwei primärseitigen Übertragungskanäle zwischen dem ersten primärseitigen Kontakt 121 und dem dritten primärseitigen Kontakt 123 und ein zweiter

Übertragungskanal der zwei primärseitigen Übertragungskanäle zwischen dem zweiten primärseitigen Kontakt 122 und dem dritten primärseitigen Kontakt 123 ausgebildet wird. Als Hochfrequenz in Zusammenhang mit einer PLC-Übertragung können beispielsweise Frequenzen von mehr als 1kHz, oder mehr als 9kHz, oder mehr als 100kHz, oder mehr als 1MHz betrachtet werden. Ferner können beispielsweise optional auch tiefere Frequenzanteile zwischen dem sekundärseitigen Übertragungskanal und ersten primärseitigen Übertragungskanal und zwischen dem sekundärseitigen Übertragungskanal und dem zweiten primärseitigen Übertragungskanal gekoppelt werden.

Beispielsweise sind daher zwischen dem ersten primärseitigen Kontakt 121 und dem ersten Kontakt 151 des Netzwerkanschlusses 150, zwischen dem zweiten primärseitigen Kontakt 122 und dem dritten Kontakt 153 des Netzwerkanschlusses 150, und zwischen dem dritten primärseitigen Kontakt 123 und dem zweiten Kontakt 152 des Netzwerkanschlusses 150 keine als Tiefpass wirkenden Bauelemente, wie beispielsweise eine Spule, angeordnet. Zwischen dem ersten primärseitigen Kontakt 121 und dem ersten Kontakt 151 des Netzwerkanschlusses 150, und/oder zwischen dem zweiten primärseitigen Kontakt 122 und dem dritten Kontakt 153 des Netzwerkanschlusses 150, und/oder zwischen dem dritten primärseitigen Kontakt 123 und dem zweiten Kontakt 152 des Netzwerkanschlusses 150 kann jedoch vorzugsweise beispielsweise jeweils ein Kondensator, welcher beispielsweise eine Kapazität von 4,7nF oder eine hiervon abweichende Kapazität aufweisen kann, angeordnet sein (nicht in Fig. 1a dargestellt). Diese Kondensatoren können die 50Hz Netzspannung herausfiltern.

Somit kann beispielsweise ein an den ersten und zweiten sekundärseitigen Kontakt 141, 142 angeschlossenes PLC-Modem ein PLC-Signal in den sekundärseitigen Übertragungskanal einspeisen, wobei dieses Signal durch die sekundärseitige Wicklung 131 des Transformators 110 zumindest teilweise sowohl in die erste primärseitige Wicklung 111 und die zweite primärseitige Wicklung 112 des Transformators 110 eingekoppelt werden kann, so dass dieses PLC-Signal zumindest teilweise sowohl über den ersten primärseitigen Übertragungskanal als auch über den zweiten primärseitigen Übertragungskanal übertragen werden kann. Diese Einkopplungsvariante kann daher beispielsweise als eine Single-Input Multiple-Output (SIMO) Kopplung betrachtet werden, wobei ein Diversity-Gewinn durch die Verwendung der zwei primärseitigen Übertragungskanäle erreicht werden kann.

Umgekehrt kann beispielsweise das PLC-Modem ein PLC-Signal von dem sekundärseitigen Übertragungskanal empfangen, wobei Signalanteile dieses PLC-Signals primärseitig sowohl über den ersten primärseitigen Übertragungskanal als auch über den zweiten primärseitigen Übertragungskanal empfangen werden, und der Transformator den ersten primärseitigen Übertragungskanal durch die erste primärseitige Wicklung 111 in die sekundärseitige Wicklung 131 einkoppelt und den zweiten primärseitigen Übertragungskanal durch die zweite primärseitige Wicklung 112 in die sekundärseitige Wicklung 131 einkoppelt. Diese Einkopplungsvariante kann daher beispielsweise als eine Multiple-Input Single-Output (MISO) Kopplung betrachtet werden, wobei ein Diversity-Gewinn durch die Verwendung der zwei primärseitigen Übertragungskanäle erreicht werden kann.

Die Kopplung des PLC-Modems an die Vorrichtung 100 zur Übertragung von Daten über das Stromversorgungsnetzwerk erfolgt auf der Sekundärseite des Transformators 110 beispielsweise ausschließlich über den ersten und zweiten sekundärseitigen Kontakt 141, 142, so dass ein an die Vorrichtung 100 angeschlossenes PLC-Modem beispielsweise ausschließlich den sekundärseitigen Übertragungskanal zur Einspeisung von PLC-Signalen in die Vorrichtung 100 und/oder ausschließlich den sekundärseitigen Übertragungskanal zum Empfang von PLC-Signalen von der Vorrichtung 100 verwendet.

Beispielsweise kann der sekundärseitige Übertragungskanal im Halbduplexverfahren abwechselnd entweder für das Senden von PLC-Signalen vom Modem oder für das Empfangen von PLC-Signalen am Modem verwendet werden.
Mit der durch die Vorrichtung 100 beschriebenen Koppelvariante zur Kopplung eines PLC-Modems an ein Stromversorgungsnetzwerk zur Übertragung von Daten über das Stromversorgungsnetzwerk kann auf eine einfache Art und Weise in Diversity-Gewinn durch die Verwendung der zwei primärseitigen Übertragungskanäle erzielt werden. Hierbei können beispielsweise herkömmliche PLC-Modems, welche nicht für eine Multiple-Input Multiple-Output (MIMO) Übertragung ausgelegt sind, durch die Vorrichtung 100 zur Übertragung von PLC-Signalen über die zwei primärseitigen Übertragungskanäle über das Stromversorgungsnetzwerk verwendet werden können, einhergehend mit einem Diversity-Gewinn.

Das Wicklungsverhältnis zwischen der ersten primärseitigen Wicklung 111 und der sekundärseitigen Wicklung 131 und das Wicklungsverhältnis zwischen der zweiten primärseitigen Wicklung 112 und der sekundärseitigen Wicklung 131 kann beispielsweise näherungsweise zwischen 1:1 und 1:2 betragen und das Wicklungsverhältnis zwischen der ersten primärseitigen Wicklung 111 und der zweiten primärseitigen Wicklung 112 kann beispielsweise näherungsweise 1:1 betragen. Somit kann beispielsweise das Wickelverhältnis zwischen der ersten primärseitigen Wicklung 111, der zweiten primärseitigen Wicklung 112 und der sekundärseitigen Wicklung 131 näherungsweise zwischen 1:1:1 und 1:1:2 liegen.

Der Begriff näherungsweise kann beispielsweise derart verstanden werden, dass eine Abweichung von weniger als 35% vom Nennwert, oder weniger als 10% vom Nennwert, oder weniger als 5% vom Nennwert, oder weniger als 1% vom Nennwert, als näherungsweise dem Nennwert entsprechend verstanden werden kann. Bei einer beispielhaften Abweichung von weniger als 10% würden bei einem näherungsweisen Wicklungsverhältnis von 1:1 Wicklungsverhältnisse zwischen 0,9:1,1 und 1,1:0,9 unter das näherungsweise Wicklungsverhältnis von 1:1 fallen.

Durch die Wahl eines näherungsweisen Wicklungsverhältnisses von 1:1 zwischen der ersten primärseitigen Wicklung 111 und der zweiten primärseitigen Wicklung 112 kann beispielweise eine gleichmäßige Einkopplung in den ersten primärseitigen Übertragungskanal und in den zweiten primärseitigen Übertragungskanal erzielt werden.

Das Wicklungsverhältnis zwischen der ersten primärseitigen Wicklung 111 und der sekundärseitigen Wicklung 131 und das Wicklungsverhältnis zwischen der zweiten primärseitigen Wicklung 112 und der sekundärseitigen Wicklung 131 kann beispielsweise eines der folgenden Verhältnisse aufweisen: näherungsweise 1:2 und näherungsweise 1:1.

Somit kann beispielsweise das Wickelverhältnis zwischen der ersten primärseitigen Wicklung 111, der zweiten primärseitigen Wicklung 112 und der sekundärseitigen Wicklung 131 näherungsweise bei 1:1:1 oder näherungsweise bei 1:1:2 liegen.

Fig. 1b zeigt eine exemplarische Vorrichtung 100' gemäß einem abgewandelten ersten Ausführungsbeispiel. Die Vorrichtung 100' basiert auf der in der Fig. 1a dargestellten Vorrichtung 100 gemäß dem ersten Ausführungsbeispiel und unterscheidet sich von dieser Vorrichtung 100 darin, dass der Transformator 110' neben der sekundärseitigen Wicklung 131, welche als erste sekundärseitige Wicklung 131 betrachtet werden kann, einen zweite sekundärseitige Wicklung 132 sowie einen dritten sekundärseitigen Kontakt 143 und einen vierten sekundärseitigen Kontakt 144 umfasst.

Die Vorrichtung 100' ist dazu eingerichtet, einen zweiten sekundärseitigen Übertragungskanal, welcher zwischen dem dritten sekundärseitigen Kontakt 143 und dem vierten sekundärseitigen Kontakt 144 ausgebildet wird, mit den zwei primärseitigen Übertragungskanälen zumindest hochfrequenzmäßig zu koppeln, wobei der erste sekundärseitige Übertragungskanal als Empfangskanal für das Modem und der zweite sekundärseitige Übertragungskanal als Sendekanal für das Modem eingerichtet ist (oder beispielsweise auch umgekehrt).

Sowohl die erste sekundärseitige Wicklung 131 als auch die zweite sekundärseitige Wicklung 132 sind mit der ersten und zweiten primärseitigen Wicklung 111, 112 induktiv gekoppelt. Der zweite sekundärseitige Kanal ist somit mit dem ersten und zweiten primärseitigen Kanal in ähnlicher oder gleicher Weise zumindest hochfrequenzmäßig gekoppelt wie der erste sekundärseitige Kanal mit dem ersten und zweiten primärseitigen Kanal zumindest hochfrequenzmäßig gekoppelt ist.

Somit kann beispielsweise der erste sekundärseitige Übertragungskanal mit einer Empfängereinheit des Modems verbunden werden, wobei die Empfängereinheit des Modems mit dem ersten und zweiten sekundärseitigen Kontakt 141, 142 des Transformators 110' zum Empfang von Signalen verbunden sein kann, und es kann beispielsweise der zweite sekundärseitige Übertragungskanal mit einer Sendeeinheit des Modems verbunden werden, wobei die Sendeeinheit des Modems mit dem dritten und vierten sekundärseitigen Kontakt 143, 143 des Transformators 110' zum Empfang von Signalen verbunden sein kann.

Beispielsweise kann das Empfangen über den ersten sekundärseitigen Übertragungskanal und das Senden über den zweiten sekundärseitigen Übertragungskanal im Halbduplexbetrieb erfolgen, da sowohl der erste sekundärseitige Übertragungskanal über den Transformator sowohl mit dem ersten als auch dem zweiten primärseitigen Übertragungskanal zumindest hochfrequenzmäßig als auch der zweite sekundärseitige Übertragungskanal über den Transformator sowohl mit dem ersten als auch dem zweiten primärseitigen Übertragungskanal zumindest hochfrequenzmäßig gekoppelt ist.

Das Wickelverhältnis zwischen der ersten sekundärseitigen Wicklung und der zweiten sekundärseitigen Wicklung ist beispielsweise näherungsweise gleich. Daher kann beispielsweise das Wickelverhältnis zwischen der ersten primärseitigen Wicklung, der zweiten primärseitigen Wicklung, der ersten sekundärseitigen Wicklung und der zweiten sekundärseitigen Wicklung näherungsweise zwischen 1:1:1:1 und 1:1:2:2 liegen, insbesondere näherungsweise 1:1:1:1 oder näherungsweise 1:1:2:2.

Somit kann beispielsweise die erste sekundärseitige Wicklung 131 zum Auskoppeln von PLC-Signalen für einen Empfänger des Modems verwendet werden und die zweite sekundärseitige Wicklung 132 zum Einkoppeln von von einem Sender des Modems erzeugten PLC-Signalen verwendet werden.

Obgleich in den folgenden Ausführungsbeispielen beispielhaft nur die Verwendung einer einzigen sekundären Wicklung zum Koppeln des Modems an das Stromversorgungsnetz gemäß dem ersten Ausführungsbeispiel beschrieben wird, kann gleichermaßen für jedes der folgenden Ausführungsbeispiele auf der Sekundärseite des Transformators die Verwendung von zwei sekundärseitigen Wicklungen 131, 132 basierend auf Vorrichtung 100' des in Fig. 1b abgewandelten ersten Ausführungsbeispiels verwendet werden.

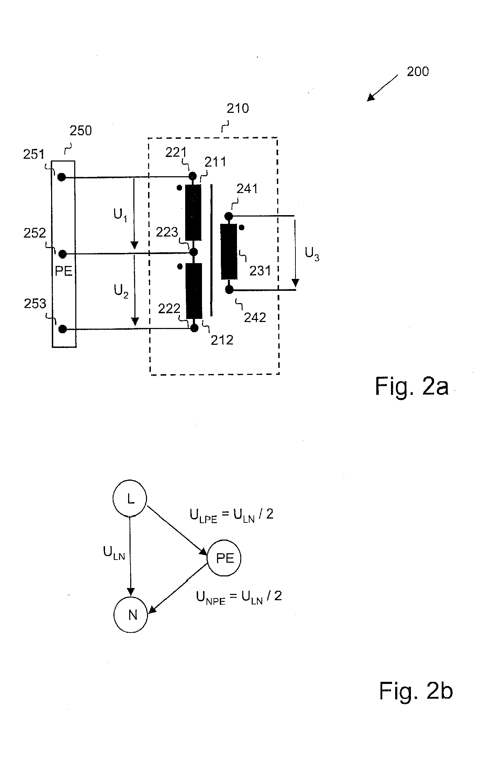

Fig. 2a zeigt eine exemplarische Vorrichtung 200 gemäß einem zweiten Ausführungsbeispiel. Die Vorrichtung 200 basiert auf der in der Fig. 1a dargestellten Vorrichtung 100 gemäß dem ersten Ausführungsbeispiel oder auf der in der Fig. 1b dargestellten Vorrichtung 100' gemäß dem abgewandelten ersten Ausführungsbeispiel. Die zuvor erläuterten Ausführungen über die Vorrichtung 100 gemäß dem ersten Ausführungsbeispiel bzw. über die Vorrichtung 100' gemäß dem abgewandelten ersten Ausführungsbeispiel können daher gleichermaßen für die Vorrichtung 200 gemäß dem zweiten Ausführungsbeispiel gelten.

In der Vorrichtung 200 ist der erste primärseitige Kontakt 221 dazu eingerichtet, über den ersten Kontakt 251 des Netzwerkanschlusses 250 mit einem Leiter aus Phasenleiter und Nulleiter verbunden zu werden, und der zweite primärseitige Kontakt 222 ist dazu eingerichtet, über den dritten Kontakt 253 des Netzwerkanschlusses 250 mit dem anderen Leiter aus Phasenleiter und Nulleiter verbunden zu werden, und der dritte primärseitige Kontakt 223 ist dazu eingerichtet, mit über den zweiten Kontakt 252 des Netzwerkanschlusses 250 mit dem Schutzleiter (PE) verbunden zu werden, wenn der Netzwerkanschluss 250 mit dem Stromversorgungsnetzwerk verbunden wird.

Dementsprechend ist der zweite Kontakt 252 des Netzwerkanschlusses 250 dazu eingerichtet, dass dieser zweite Kontakt 252 mit dem Schutzleiter (PE) des Stromversorgungsnetzes verbunden wird, wenn der Netzwerkanschluss 250, beispielsweise durch Einstecken eines Schutzkontaktsteckers in eine entsprechende Steckdose des Stromversorgungsnetzwerkes, mit dem Stromversorgungsnetzwerk verbunden wird. Ferner ist der erste Kontakt 251 des Netzwerkanschlusses 250 dazu eingerichtet, mit einem Leiter aus Phasenleiter und Nullleiter des Stromversorgungsnetzes verbunden zu werden, und der dritte Kontakt 253 des Netzwerkanschlusses 250 dazu eingerichtet, mit dem anderen Leiter aus Phasenleiter und Nullleiter des Stromversorgungsnetzes verbunden zu werden, wenn die Netzwerkanschluss 250 an das Stromversorgungsnetz angeschlossen wird, wie beispielsweise durch Einstecken eines Schutzkontaktsteckers in eine entsprechende Steckdose des Stromversorgungsnetzwerkes.

Das Wicklungsverhältnis zwischen der ersten primärseitigen Wicklung 211, der zweiten primärseitigen Wicklung 212 und der sekundärseitigen Wicklung 231 beträgt bei der Vorrichtung 200 beispielsweise näherungsweise 1:1:2, d.h. das Wicklungsverhältnis zwischen der ersten primärseitigen Wicklung 211 und der zweiten primärseitigen Wicklung 212 beträgt beispielsweise näherungsweise 1:1, während das Wicklungsverhältnis zwischen der ersten primärseitigen Wicklung 211 und der sekundärseitigen Wicklung 231 näherungsweise 1:2 beträgt bzw. das Wicklungsverhältnis zwischen der zweiten primärseitigen Wicklung 212 und der sekundärseitigen Wicklung 231 näherungsweise 1:2 beträgt.

Ferner weisen bei der Vorrichtung 200 gemäß dem zweiten Ausführungsbeispiel die erste primärseitige Wicklung 211 und die zweite sekundärseitige Wicklung 212 einen gleichen Wicklungssinn auf, wobei der Wicklungssinn der Wicklungen 211, 212, 231 in Fig. 2a und den folgenden Figuren durch einen Punkt an einem Wicklungsanfang der jeweiligen Wicklung dargestellt ist. Obgleich der Wicklungssinn der sekundärseitigen Wicklung in Fig. 2a durch einen entsprechenden Punkt gekennzeichnet ist, kann der Wicklungssinn der sekundärseitigen Wicklung 231 auch entgegengesetzt zur Darstellung in Fig. 2a und somit frei wählbar sein, d.h. der Wicklungssinn der sekundärseitigen Wicklung 231 kann beispielsweise frei gewählt werden. Dies gilt beispielsweise auch für die optionale zweite sekundärseitige Wicklung (nicht in Fig. 2a) dargestellt entsprechend der Vorrichtung 100' aus Fig. 1b.Somit kann beispielsweise das Wickelverhältnis zwischen der ersten primärseitigen Wicklung 111, der zweiten primärseitigen Wicklung 112 und der sekundärseitigen Wicklung 131 näherungsweise 1:1:2 betragen, so dass eine Hälfte einer in den sekundärseitigen Übertragungskanal eingespeisten Spannung |U₃| als Spannung |U₁| in den ersten primärseitigen Übertragungskanal und die andere Hälfte der eingespeisten Spannung |U₃| als Spannung |U₂| in den zweiten primärseitigen Übertragungskanal gekoppelt wird. Hierbei ist das Übertragungsverhältnis zum Phasenleiter-Neutralleiter-Pfad, genau wie bei einem nicht-diversity Gerät, 1:1, wodurch sich am Signalpegel nichts ändert.

Durch den dritten primärseitigen Kontakt 223 des Transformators 210 erfolgt über den zweiten Kontakt 252 des Netzwerkanschlusses 250 ein Mittelabgriff der beiden primärseitigen Wicklungen 211, 212 an PE, wobei jeweils die halbe Signalspannung auf PE gekoppelt wird.

Somit weist der Transformator 210 gemäß Vorrichtung 200 eine volle Symmetrie bezüglich der Ein- und Auskopplung von PLC-Signalen zwischen dem sekundärseitigen Übertragungskanal und dem ersten und zweiten primärseitigen Übertragungskanal auf. Diese Kopplungsart kann beispielsweise dann besonders vorteilhaft sein, wenn der Netzanschluss 250 einen Schutzkontaktstecker umfasst, welcher nicht eindeutig bezüglich der Kontaktierung von Phasenleiter und Nulleiter ist, wie beispielsweise einem zu CEE ("Commission on the Rules for the Approval of the Electrical Equipment") 7/4 kompatiblen Stecker, da diese Kopplungsart unabhängig davon ist, ob der erste Kontakt 251 des Netzanschlusses 250 mit dem Phasenleiter oder dem Nulleiter und der dritte Kontakt 253 des Netzanschlusses 250 mit dem Nulleiter oder dem Phasenleiter verbunden ist, da in beiden Fällen die volle Symmetrie gewährleistet wird. Ferner erfolgt keine Erhöhung der Störaussendungen, da der Signalpegel unverändert bleibt. Somit können beispielsweise die in der EN50561 (Einrichtungen der Informationstechnik, Funkstöreigenschaften - Grenzwerte und Messerverfahren) definierten Grenzwerte bezüglich des Sendepegels eingehalten werden, obwohl ein diversity-Gewinn erzielt wird.

Da diese Koppelart unabhängig von der Einsteckposition des Netzsteckers ist, gibt es bei dieser Koppelart keinen Worst-Case, d.h. eine bestimmte Einsteckposition eines Netzsteckers, bei welchem die Störaussendung maximal ist und einen Grenzwert überschreiten würde, welches eine Absenkung der Sendeleistung nötig machen würde. Somit kann mit dieser Koppelart gemäß der Vorrichtung 200 gemäß dem zweiten Ausführungsbeispiel ein Absenken der Sendeleistung zum Einhalten von Grenzwerten vermieden werden.

Im Folgenden sei ohne Einschränkung beispielhaft angenommen, dass der erste Kontakt 251 des Netzwerkanschlusses 250 mit dem Phasenleiter (L) und der dritte Kontakt 253 des Netzwerkanschlusses 250 mit dem Nullleiter (N) des Stromversorgungsnetzes verbunden wird, wenn der Netzwerkanschluss 250 an das Stromversorgungsnetzwerk angeschlossen ist, wobei dies auch beispielsweise genau umgekehrt erfolgen kann. Fig. 2b zeigt für diese beispielhafte Annahme ein beispielhaftes Zeigerdiagramm für die exemplarische Vorrichtung 200 gemäß dem zweiten Ausführungsbeispiel.

Die Spannung U_{LN} zwischen dem Phasenleiter L und dem Nulleiter N beträgt immer näherungsweise das Doppelte der Spannung U_{LPE} zwischen L und dem Schutzleiter PE und immer näherungsweise das Doppelte der Spannung U_{NPE} zwischen PE und N. Somit kann die näherungsweise volle Symmetrie gewährleistet werden.

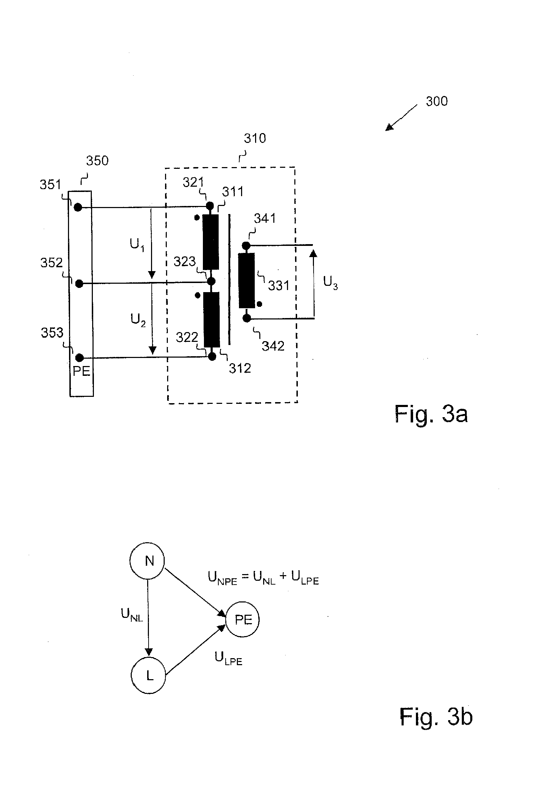

Fig. 3a zeigt eine exemplarische Vorrichtung 300 gemäß einem dritten Ausführungsbeispiel. Die Vorrichtung 300 basiert auf der in der Fig. 1 dargestellten Vorrichtung 100 gemäß dem ersten Ausführungsbeispiel oder auf der in der Fig. 1b dargestellten Vorrichtung 100' gemäß dem abgewandelten ersten Ausführungsbeispiel. Die zuvor erläuterten Ausführungen über die Vorrichtung 100 gemäß dem ersten Ausführungsbeispiel oder über die Vorrichtung 100' gemäß dem abgewandelten ersten Ausführungsbeispiel können daher gleichermaßen für die Vorrichtung 300 gemäß dem dritten Ausführungsbeispiel gelten.

In der Vorrichtung 300 ist der erste primärseitige Kontakt 321 dazu eingerichtet, über den ersten Kontakt 351 des Netzwerkanschlusses 350 mit einem Leiter aus Phasenleiter und Nulleiter verbunden zu werden, und der dritte primärseitige Kontakt 323 ist dazu eingerichtet, über den zweiten Kontakt 352 des Netzwerkanschlusses 350 mit dem anderen Leiter aus Phasenleiter und Nulleiter verbunden zu werden, und der zweite primärseitige Kontakt 322 ist dazu eingerichtet, über den dritten Kontakt 353 des Netzwerkanschlusses 350 mit dem Schutzleiter (PE) verbunden zu werden, wenn der Netzwerkanschluss 350 mit dem Stromversorgungsnetzwerk verbunden wird.

Dementsprechend ist der dritte Kontakt 353 des Netzwerkanschlusses 350 dazu eingerichtet, dass dieser dritte Kontakt 353 mit dem Schutzleiter (PE) des Stromversorgungsnetzes verbunden wird, wenn der Netzwerkanschluss 350, beispielsweise durch Einstecken eines Schutzkontaktsteckers in eine entsprechende Steckdose des Stromversorgungsnetzwerkes, mit dem Stromversorgungsnetzwerk verbunden wird. Ferner ist der erste Kontakt 351 des Netzwerkanschlusses 350 dazu eingerichtet, mit einem Leiter aus Phasenleiter und Nullleiter des Stromversorgungsnetzes verbunden zu werden, und der zweite Kontakt 352 des Netzwerkanschlusses 350 dazu eingerichtet, mit dem anderen Leiter aus Phasenleiter und Nullleiter des Stromversorgungsnetzes verbunden zu werden, wenn die Netzwerkanschluss 350 an das Stromversorgungsnetz angeschlossen wird, wie beispielsweise durch Einstecken eines Schutzkontaktsteckers in eine entsprechende Steckdose des Stromversorgungsnetzwerkes.

Das Wicklungsverhältnis zwischen der ersten primärseitigen Wicklung 311, der zweiten primärseitigen Wicklung 312 und der sekundärseitigen Wicklung 331 beträgt bei der Vorrichtung 300 beispielsweise näherungsweise 1:1:1, d.h. das Wicklungsverhältnis zwischen der ersten primärseitigen Wicklung 311 und der zweiten primärseitigen Wicklung 312 beträgt beispielsweise näherungsweise 1:1, während das Wicklungsverhältnis zwischen der ersten primärseitigen Wicklung 311 und der sekundärseitigen Wicklung 331 näherungsweise 1:1 beträgt bzw. das Wicklungsverhältnis zwischen der zweiten primärseitigen Wicklung 312 und der sekundärseitigen Wicklung 331 näherungsweise 1:1 beträgt.

Ferner weist bei Vorrichtung 300 die erste primärseitige Wicklung 321 den gleichen Wicklungssinn wie die zweite primärseitige Wicklung 312 auf. Obgleich der Wicklungssinn der sekundärseitigen Wicklung 331 in Fig. 3a durch einen entsprechenden Punkt gekennzeichnet ist, kann der Wicklungssinn der sekundärseitigen Wicklung 331 auch entgegengesetzt zur Darstellung in Fig. 3a und somit frei wählbar sein, d.h. der Wicklungssinn der sekundärseitigen Wicklung 331 kann beispielsweise frei gewählt werden. Dies gilt beispielsweise auch für die optionale zweite sekundärseitige Wicklung (nicht in Fig. 3a) dargestellt entsprechend der Vorrichtung 100' aus Fig. 1b.

Durch das Wicklungsverhältnis von näherungsweise 1:1:1 ist die in den ersten primärseitigen Übertragungskanal eingekoppelte Spannung U₁ näherungsweise gleich der in den zweiten primärseitigen Übertragungskanal eingekoppelten Spannung U₂.

Durch diese Kopplungsvariante kann eine einfache Realisierung einer SIMO- bzw. MISO-Kopplung für PLC-Modems erzielt werden. Im Folgenden sei ohne Einschränkung beispielhaft angenommen, dass der erste Kontakt 351 des Netzwerkanschlusses 350 mit dem Neutralleiter (N) und der zweite Kontakt 352 des Netzwerkanschlusses 350 mit dem Phasenleiter (L) des Stromversorgungsnetzes verbunden wird, wenn der Netzwerkanschluss 350 an das Stromversorgungsnetzwerk angeschlossen ist, wobei dies auch beispielsweise genau umgekehrt erfolgen kann.

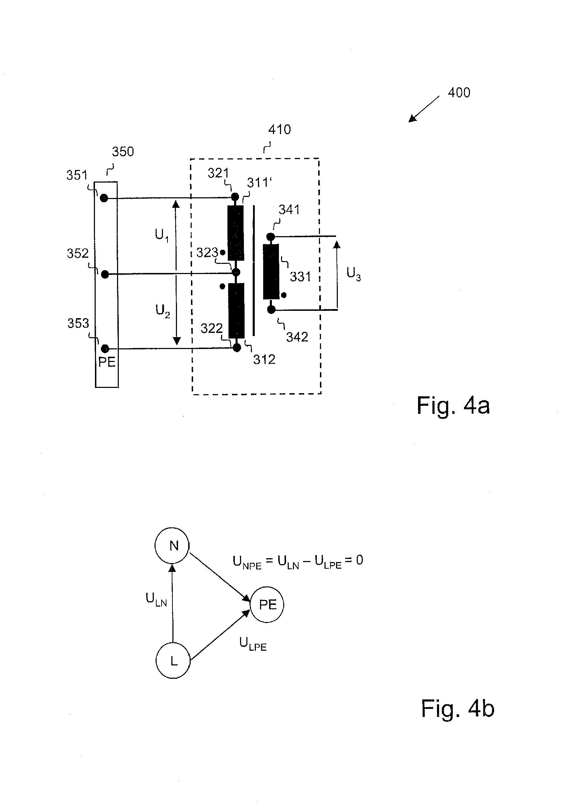

Fig. 3b zeigt für diese beispielhafte Annahme ein beispielhaftes Zeigerdiagramm für die exemplarische Vorrichtung 300 gemäß dem dritten Ausführungsbeispiel. Fig. 4a zeigt eine exemplarische Vorrichtung 400 gemäß einem vierten Ausführungsbeispiel, welche auf der in der Fig. 3a dargestellten Vorrichtung 300 gemäß dem dritten Ausführungsbeispiel basiert und sich von dieser Vorrichtung 300 nur darin unterscheidet, dass der Wicklungssinn der ersten primärseitigen Wicklung 311' entgegengesetzt dem Wicklungssinn der zweiten primärseitigen Wicklung 312 ist. Wie beispielsweise in Fig. 4a dargestellt, kann sowohl der Wicklungsanfang der ersten primärseitigen Wicklung 311' als auch der Wicklungsanfang der zweiten primärseitigen Wicklung 312 am dritten primärseitigen Kontakt 323 liegen (oder umgekehrt können die jeweiligen Wicklungsenden der ersten und zweiten primärseitigen Wicklungen 311', 312 am dritten primärseitigen Kontakt 323 liegen).

Im Folgenden sei ohne Einschränkung beispielhaft angenommen, dass der erste Kontakt 351 des Netzwerkanschlusses 350 mit dem Neutralleiter (N) und der zweite Kontakt 352 des Netzwerkanschlusses 350 mit dem Phasenleiter (L) des Stromversorgungsnetzes verbunden wird, wenn der Netzwerkanschluss 350 an das Stromversorgungsnetzwerk angeschlossen ist, wobei dies auch beispielsweise genau umgekehrt erfolgen kann.

Fig. 4b zeigt für diese beispielhafte Annahme ein beispielhaftes Zeigerdiagramm für die exemplarische Vorrichtung 400 gemäß dem vierten Ausführungsbeispiel.

Die zwischen L und N eingekoppelte Signalspannung U₁ und die zwischen L und PE eingekoppelte Signalspannung U₂ sind näherungsweise identisch. Durch die Phasenlage dieser Kopplung ergibt sich zwischen N und PE ein nahezu identisches Signal, wodurch die Spannungsdifferenz U_{NPE} zwischen N und PE nahezu Null wird.

Durch diese Kopplungsvariante kann eine einfache Realisierung einer SIMO- bzw. MISO-Kopplung für PLC-Modems erzielt werden.

Generell sind die in dieser Beschreibung verwendeten Begriffe erste primärseitige Wicklung und zweite primärseitige Wicklung in Bezug auf den Transformator so zu verstehen, dass die erste primärseitige Wicklung und die zweite primärseitige Wicklung jeweils verschiedene Spulen darstellen, oder dass die erste primärseitige Wicklung einen ersten Wicklungsteil einer Spule darstellt und die zweite primärseitige Wicklung einen zweiten Wicklungsteil dieser Spule darstellt, wobei der dritte primärseitige Kontakt eine Anzapfung (wie beispielsweise eine Mittel-Anzapfung) dieser Spule zwischen dem ersten und zweiten Wicklungsteil darstellt. Ferner können auch die in der Beschreibung genannte Begriffe "primär" und "sekundär" in Bezug auf den Transformator bei der Implementierung des Transformators vertauscht werden.

## Patentansprüche

1. Vorrichtung (100,100') zur Kopplung eines Modems an ein Stromversorgungsnetz zur Übertragung von Daten über das Stromversorgungsnetz, umfassend:
- einen Netzanschluss (150), welcher dazu eingerichtet ist, die Vorrichtung (100, 100') mit einem Phasenleiter (151), einen Nulleiter (152) und einen Schutzleiter (153) des Stromversorgungsnetz zu verbinden,
- einen Transformator (110, 110'), umfassend eine sekundärseitige Wicklung (131), eine erste primärseitige Wicklung und eine mit der ersten primärseitigen Wicklung in Reihe verbundene zweite primärseitige Wicklung (111),
- einen ersten primärseitigen Kontakt, welcher an dem der zweiten primärseitigen Wicklung (112) abgewandten Ende der ersten primärseitigen Wicklung (111) angeordnet ist,
- einen zweiten primärseitigen Kontakt (122), welcher an dem der ersten primärseitigen Wicklung (111) abgewandten Ende der zweiten primärseitigen Wicklung (112) angeordnet ist,
- einen dritten primärseitigen Kontakt (123), welcher zwischen der ersten primärseitigen Wicklung (111) und der zweiten primärseitigen Wicklung (112) angeordnet ist,
- einen ersten (141) und einen zweiten (142) sekundärseitigen Kontakt, welche jeweils an den verschiedenen Enden der sekundärseitigen Wicklung (131) angeordnet sind,
- wobei der erste primärseitige Kontakt (121), der zweite primärseitige Kontakt (122) und der dritte primärseitige Kontakt (123) jeweils dazu eingerichtet sind, über den Netzanschluss mit jeweils einem verschiedenen Leiter aus einem Phasenleiter, einem Nulleiter (152) und einem Schutzleiter (153) des Stromversorgungsnetzes verbunden zu werden, und
- wobei die Vorrichtung (100, 100') dazu eingerichtet ist, einen sekundärseitigen Übertragungskanal, welcher zwischen dem ersten und zweiten sekundärseitigen Kontakt (121, 122) ausgebildet wird, mit zwei primärseitigen Übertragungskanälen zumindest hochfrequenzmäßig zu koppeln, und
- wobei die Vorrichtung (100, 100') dazu eingerichtet ist, einen ersten Übertragungskanal der zwei primärseitigen Übertragungskanäle zwischen dem ersten und dem dritten primärseitigen Kontakt (121, 123)und einen zweiten Übertragungskanal der zwei primärseitigen Übertragungskanäle zwischen dem zweiten und dem dritten primärseitigen Kontakt auszubilden, **dadurch gekennzeichnet, dass**
das Wicklungsverhältnis zwischen der ersten primärseitigen Wicklung (111) und der zweiten primärseitigen Wicklung (112) näherungsweise 1:1 beträgt, und das Wicklungsverhältnis zwischen der ersten primärseitigen Wicklung (111) und der sekundärseitigen Wicklung (131) näherungsweise 1:2 beträgt und das Wicklungsverhältnis zwischen der zweiten primärseitigen Wicklung (112) und der sekundärseitigen Wicklung (131) näherungsweise 1:2 beträgt.

2. Vorrichtung (100, 100') nach Anspruch 1, **dadurch gekennzeichnet, dass** die erste primärseitige Wicklung (111) und die sekundärseitige Wicklung (131) einen gleichen Wicklungssinn aufweisen und dass die zweite primärseitige Wicklung (112) und die sekundärseitige Wicklung (131) einen gleichen Wicklungssinn aufweisen.

3. Vorrichtung (100, 100') nach einem der vorangegangenen Ansprüche, **dadurch gekennzeichnet, dass** der erste primärseitige Kontakt (121) dazu eingerichtet ist, mit einem Leiter aus Phasenleiter (151)und Nulleiter (152) verbunden zu werden, und der zweite primärseitige Kontakt (122) dazu eingerichtet ist, mit dem anderen Leiter aus Phasenleiter (151) und Nulleiter (152) verbunden zu werden, und wobei der dritte primärseitige Kontakt (123) dazu eingerichtet ist, mit dem Schutzleiter (153) verbunden zu werden.

4. Vorrichtung (100, 100') nach einem der vorangegangenen Ansprüche, **dadurch gekennzeichnet, dass** die zweite primärseitige Wicklung (122) und die sekundärseitige Wicklung (131) einen entgegengesetzten Wicklungssinn aufweisen.

5. Vorrichtung (100, 100') nach Anspruch 4, **dadurch gekennzeichnet, dass** die erste primärseitige Wicklung (121) und die sekundärseitige Wicklung (131) einen der folgenden Wicklungssinne aufweisen:
- einen entgegengesetzten Wicklungssinn, und
- einen gleichen Wicklungssinn.

6. Vorrichtung (100, 100') nach einem der vorangegangenen Ansprüche, **dadurch gekennzeichnet, dass** der erste primärseitige Kontakt (121) dazu eingerichtet ist, mit einem Leiter aus Phasenleiter (151)und Nulleiter (152) verbunden zu werden, und der dritte primärseitige Kontakt (123) dazu eingerichtet ist, mit dem anderen Leiter aus Phasenleiter (151)und Nulleiter (152) verbunden zu werden, und wobei der zweite primärseitige Kontakt (122) dazu eingerichtet ist, mit dem Schutzleiter (153) verbunden zu werden.

7. Vorrichtung (100') nach einem der vorangegangenen Ansprüche, **dadurch gekennzeichnet**, wobei die Vorrichtung (100') dazu eingerichtet ist, die Kopplung des Modems zur Übertragung von Daten an das Stromversorgungsnetz an der Sekundärseite des Transformators (110)ausschließlich über den ersten und den zweiten sekundärseitigen Kontakt (121, 122) auszuführen.

8. Vorrichtung (100, 100') nach einem der vorangegangenen Ansprüche, **dadurch gekennzeichnet, dass** der Netzanschluss einen zu CEE 7/4 kompatiblen Schutzkontaktstecker umfasst.

9. Vorrichtung (100') nach einem der vorangegangenen Ansprüche, **dadurch gekennzeichnet, dass** die sekundärseitige Wicklung (131) des Transformators (110') eine erste sekundärseitige Wicklung des Transformators (110') und der sekundärseitige Übertragungskanal ein erster sekundärseitiger Übertragungskanal darstellt, und der Transformator (110') eine zweite sekundärseitige Wicklung (132) und einen dritten und einen vierten sekundärseitigen Kontakt (143, 144) umfasst, wobei der dritte und vierte sekundärseitige Kontakt (143, 144) jeweils an den verschiedenen Enden der zweiten sekundärseitigen Wicklung (132) angeordnet sind, und wobei die Vorrichtung (100') dazu eingerichtet ist, einen zweiten sekundärseitigen Übertragungskanal, welcher zwischen dem dritten und vierten sekundärseitigen Kontakt (143, 144) ausgebildet wird, mit den zwei primärseitigen Übertragungskanälen zumindest hochfrequenzmäßig zu koppeln, wobei der erste sekundärseitige Übertragungskanal als Empfangskanal für das Modem und der zweite sekundärseitige Übertragungskanal als Sendekanal für das Modem eingerichtet ist.

10. Vorrichtung (100') nach Anspruch 9, wobei das Wickelverhältnis zwischen der ersten sekundärseitigen Wicklung (131) und der zweiten sekundärseitigen Wicklung (132) näherungsweise gleich ist.

11. Modem zur Übertragung von Daten über ein Stromversorgungsnetz, umfassend eine Vorrichtung (100, 100') nach einem der Ansprüche 1-8, wobei das Modem mit dem ersten und zweiten sekundärseitigen Kontakt (141, 142) der Vorrichtung (100, 100') zur Kopplung des Modems an das Stromversorgungsnetz angeschlossen ist.

12. Modem nach Anspruch 11, wobei die Kopplung des Modems zur Übertragung von Daten an das Stromversorgungsnetz auf der Sekundärseite des Transformators ausschließlich über den ersten und den zweiten sekundärseitigen Kontakt (141, 142) erfolgt.

13. Modem zur Übertragung von Daten über ein Stromversorgungsnetz, umfassend eine Vorrichtung (100, 100') nach einem der Ansprüche 9-10, wobei das Modem mit dem ersten und zweiten sekundärseitigen Kontakt der Vorrichtung (100, 100') zur Kopplung des Modems an das Stromversorgungsnetz für den Empfang von Signalen am Modem angeschlossen ist, und wobei das Modem mit dem dritten und vierten sekundärseitigen Kontakt (141, 142) der Vorrichtung (100, 100') zur Kopplung des Modems an das Stromversorgungsnetz für das Senden von Signalen vom Modem angeschlossen ist.
